# EUROPEAN PATENT APPLICATION

(11) **EP 2 597 924 A1**
(43) Date of publication of application: **29.05.2013**
(21) Application number: 12166627.5
(22) Date of filing: 03.05.2012
(51) Int. Cl.: H04W 76/02, H04W 52/02, H04W 4/00

(54) **Method for Establishing Connection, Module for Establishing Connection and Terminal Equipment**

(30) Priority: 25.11.2011 CN 201110382063; 27.04.2012 US 201213458364
(71) Applicant: Sony Ericsson Mobile Communications AB, 221 88 Lund (SE)
(72) Inventor: Jiang, Hongqing, 100102 Beijing (CN); Fu, Bozhi, Beijing (CN); Bao, Nan, Beijing (CN); Danielson, Jacelyn Joy, Beijing (CN); Zhao, Hui, Beijing (CN); Cui, Xiang, Beijing (CN); Yao, Weifeng, Beijing (CN); Li, Jing, Beijing (CN)
(74) Representative: Valea AB

(57) **Abstract**

The present invention relates to method for establishing connection, module for establishing connection and terminal equipment. The method comprises: transmitting to a target equipment in an NFC manner, a request for acquiring connection information of the target equipment; receiving a response message containing the connection information returned by the target equipment in an NFC manner in response to the request; wherein the connection information is pre-acquired and stored by the target equipment; and establishing connection with the target equipment based on the connection information. After transmitting the request message, the initiating equipment may receive the connection information returned by the target equipment, and establish the connection with the target equipment based on the connection information, with no need of retransmitting a request after waiting for a certain period of time, and with no need of keeping the initiating equipment and the target equipment in physically close.

## Description

### Technical Field

The present invention relates to near-field communication technologies, and in particular to a method for establishing connection, a module for establishing connection and a terminal equipment.

### Background Art

Near-field communication (NFC) is a small distance noncontact communication technology. Currently, in order to realize fast transmission of data between equipment, an NFC module and a wireless communication module, such as BT or Wi-Fi module, are configured in a terminal equipment at the same time. In this way, when data, such as a media file, or a picture, etc., is transmitted between terminal equipments, fast transmission of data is realized on the basis of NFC with the help of such small distance wireless technologies as Bluetooth (BT), and wireless fidelity (Wi-Fi) (802.11), etc.

When data are transmitted between an initiating equipment, configured with an NFC module and a wireless communication module at the same time, and a target equipment, the initiating equipment first acquires connection information of the target equipment by way of NFC, and establishes connection with the target equipment. For example, when both of the initiating equipment and the target equipment are configured with BT modules, the connection information is the MAC address of the target equipment.

The initiating equipment first transmits a request to the target equipment for acquiring connection information, and if the target equipment does not initiate the function of the wireless communication module after the target equipment receives the request, the target equipment initiates the function of the wireless communication module and returns a response message at the same time, informing the initiating equipment to wait for a certain period of time. Upon receiving the response message and waiting for a certain period of time, the initiating equipment transmits again a request to the target equipment for acquiring connection information of the target equipment, the target equipment finds out the connection information after the wireless communication module is initiated, and then the target equipment returns the connection information in response to the request.

### Summary of the Invention

In the implementation of the present invention, this inventor found that the defects of the above method for establishing connection exist as follows:
In the case where the wireless communication module of the target equipment is not initiated, the initiating equipment has to wait for a relatively long period of time and may acquire the connection information only after it issues a request again. Also, after the function of the wireless communication module is initiated, the target equipment may acquire the connection information only through the interface between it and the wireless communication module. Furthermore, since the transmission of above-mentioned data is based on NFC technology, the distance between the initiating equipment and the target equipment is required to be relatively short, such as 1-2 cm, and the maximum distance is less than or equal to 10 cm. Therefore, during the process that the initiating equipment waits for a certain period of time, it is required to maintain the condition that the initiating equipment and the target equipment are placed together, bringing inconvenience to users.

The embodiments of the present invention provide a method for establishing connection, a connection establishing module and a terminal equipment, so as to solve the above problems existed in the prior art, shorten waiting time of users, and bring convenience to users.

According to an aspect of embodiments of the present invention, there is provided a method for establishing connection, comprising:
transmitting, by an initiating equipment to a target equipment in an NFC manner, a request for acquiring connection information of the target equipment corresponding to a connection manner;
receiving a response message containing the connection information returned by the target equipment in an NFC manner in response to the request; wherein the connection information is pre-acquired and stored by the target equipment; and
establishing connection with the target equipment based on the connection information.

The connection information comprises address information of the target equipment.

The request is further used for indicating connection information of a network node currently used by the target equipment.

The connection information is acquired by the target equipment from a configuration file based on the connection manner, or acquired from the network node based on the connection manner.

The method further comprises: judging whether a transmission module corresponding to the connection manner is activated; and activating the transmission module, if the result of judgment is that the transmission module is not activated.

The method further comprises: disabling the transmission module when the connection between the initiating equipment and the target equipment is established and data transmission is completed.

According to another aspect of embodiments of the present invention, there is further provided a method for establishing connection, comprising:
receiving, by a target equipment, a request transmitted by an initiating equipment in an NFC manner, the request being used for instructing to acquire connection information of the target equipment corresponding to a connection manner; and
transmitting the pre-acquired connection information in an NFC manner to the initiating equipment in response to the request.

The connection information is address information of the target equipment.

Before receiving the request transmitted by the initiating equipment, the method further comprises:
reading the connection information from the configuration file of the target equipment, or reading the connection information from a network node; and storing the connection information.

The method further comprises: if a transmission module of the target equipment corresponding to the connection manner is not activated, activating the transmission module.

According to a further aspect of embodiments of the present invention, there is further provided a connection establishing module, comprising:
a first transmitting unit for transmitting to a target equipment in an NFC manner, a request for acquiring connection information of the target equipment corresponding to a connection manner;
a first receiving unit for receiving a response message containing the connection information returned by the target equipment in an NFC manner in response to the request; wherein the connection information is pre-acquired and stored by the target equipment; and
a connection establishing unit for establishing connection with the target equipment based on the connection information.

The connection information is address information of the target equipment.

The connection information is acquired by the target equipment from its configuration file, or acquired from a network node based on the connection manner.

The connection establishing module further comprises: a judging unit for judging whether a transmission module corresponding to the connection manner is activated; and a first activating unit for activating the transmission module, if the result of judgment of the judging unit is that the transmission module is not activated.

The connection establishing module further comprises: a disabling unit for disabling the transmission module when the connection between the initiating equipment and the target equipment is established and data transmission is completed.

According to still another aspect of embodiments of the present invention, there is further provided a connection establishing module, comprising: a second receiving unit for receiving a request transmitted by an initiating equipment in an NFC manner, the request being used for instructing to acquire connection information corresponding to a connection manner, of the target equipment to which the connection establishing module belongs; and a second transmitting unit for transmitting the pre-acquired connection information in an NFC manner to the initiating equipment in response to the request.

The connection information is an address to which the transmission module corresponds.

The connection establishing module further comprises:
an information reading unit for reading the connection information from the configuration file of the target equipment; and a first storing unit for storing the connection information.

The connection establishing module further comprises:
an information acquiring unit for acquiring the connection information from a network node, and acquiring connection information of the network node; and
a second storing unit for storing the connection information.

Preferably, the connection establishing module further comprises:
a second activating unit for activating the transmission module in case that a transmission module of the target equipment corresponding to the connection manner is not activated.

According to still another aspect of embodiments of the present invention, there is further provided a terminal equipment, comprising the connection establishing module as stated above.

In accordance with the method for establishing connection, the connection establishing module and the terminal equipment in the embodiments of the present invention, after the initiating equipment transmits a request message in an NFC manner, connection information returned by target equipment may be received, and connection with the target equipment may be established based on the connection information, with no need of retransmitting a request after waiting for a certain period of time, and with no need of placing the initiating equipment and the target equipment together, bringing great convenience to users when using the above equipment.

Many aspects of the invention can be better understood with reference to the following drawings. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

### Brief Description of the Drawings

The drawings are included to provide further understanding of the present invention, which constitute a part of the specification and illustrate the preferred embodiments of the present invention, and are used for setting forth the principles of the present invention together with the description. It is understood that the drawings below are merely some of the embodiments of the present invention, and other drawings may be obtained by those skilled in the art according to these drawings without making an inventive effort.
Figure 1 is a flowchart of the method for establishing connection in accordance with the first embodiment of the present invention;
Figure 2 is a flowchart of the method for establishing connection in accordance with the second embodiment of the present invention;
Figure 3 is a flowchart of the method for establishing connection in accordance with the third embodiment of the present invention;
Figure 4 is a flowchart of the method for establishing connection in accordance with the fourth embodiment of the present invention;
Figure 5 is a schematic diagram showing the structure of the connection establishing module in accordance with the fifth embodiment of the present invention;
Figure 6 is a schematic diagram showing the structure of the connection establishing module in accordance with the sixth embodiment of the present invention;
Figure 7 is a schematic diagram showing the structure of the terminal equipment in accordance with the seventh embodiment of the present invention; and
Figure 8 is a schematic diagram showing the structure of the terminal equipment in accordance with the eight embodiment of the present invention.

### Detailed Description of the Invention

The particular embodiments of the present invention will be described below with reference to the drawings. In the description below, details are given for the purpose of explanation, but not for limitation, so as to assist completely understanding the present invention. However, it will be evident to those skilled in the art that the present invention may be carried out in other embodiments departing from these particular details.

It should be noted that in order that the present invention is not made obscure due to unnecessary details, only structures of equipment and/or processing steps closely related to the technical solution of the present invention are shown in the drawings, and other details less related to the present invention are omitted.

The term "terminal equipment" may be referred to as a "mobile wireless terminal" or a "mobile terminal", which comprises all devices such as mobile telephones, pagers, communicators, electronic organizers, personal digital assistants (PDAs), smartphones, mobile communication devices or the like.

In embodiments of the present invention, embodiments of the invention are described primarily in the context of a portable electronic device in the form of a mobile telephone (also referred to as "mobile phone"). However, it shall be appreciated that the invention is not limited to the context of a mobile telephone and may relate to any type of appropriate electronic apparatus having the function of photographing and sound recording.

The embodiments of the present invention are described as follows with reference to the drawings.

For the purpose of explanation, the party issuing a request during communication is referred to as an initiating equipment, the other party is referred to as a target equipment, and the initiating equipment and the target equipment are both equipped with an NFC module and a transmission module. The transmission module may be a near field wireless communication module. For example, if both parties in communication are linked by a BT manner, the transmission module is a BT module; and if a manner of Wi-Fi is used, the transmission module is a Wi-Fi module.

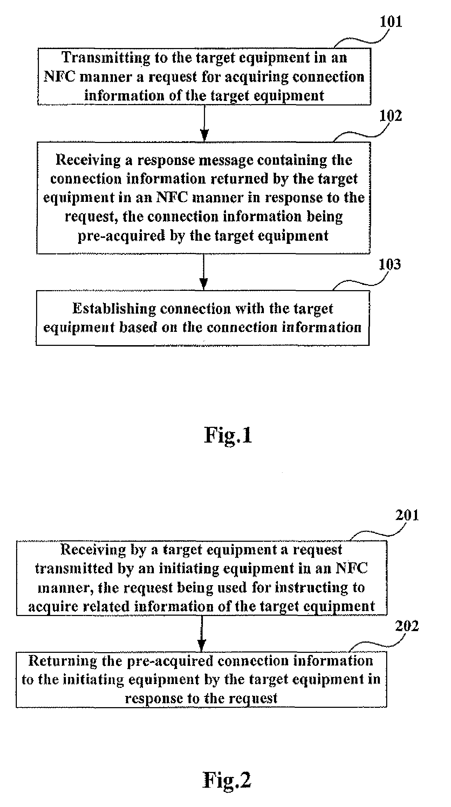

Fig. 1 is a flowchart of the method for establishing connection in accordance with the first embodiment of the present invention. This embodiment will be explained from the point of view of an initiating side. As shown in Fig. 1, when the initiating equipment is in contact with the target equipment, the method comprises:
Step 101: transmitting to the target equipment in an NFC manner, a request for acquiring connection information of the target equipment corresponding to a connection manner.
Step 102: receiving a response message containing the connection information returned by the target equipment in an NFC manner in response to the request; wherein the connection information is pre-acquired and stored by the target equipment.
Step 103: establishing connection with the target equipment based on the connection information.

It can be seen from the above embodiment that after transmitting the request message in the NFC manner, the initiating equipment may directly receive the connection information returned by the target equipment, and establish connection with the target equipment based on the connection information. There is no need for retransmitting a request after waiting for a period of time, and there is no need to maintain the condition that the initiating equipment and the target equipment together, bringing great convenience to users in using the above equipment.

In this embodiment, when the initiating equipment plans to establish connection with the target equipment, it is necessary for the initiating equipment to obtain the connection information of the target equipment. For example, the connection information may be a media access control (MAC) address; however, it is not limited thereto, and sometimes, the connection information may be an IP address, related to the connection manner adopted. For example, when a BT manner is used in connection, the connection information is a MAC address; and when a Wi-Fi manner is used in connection, the connection information is an IP address.

In step 101, the initiating equipment transmits the request to the outside by the NFC module, and the target equipment may acquire this request when it is close to the initiating equipment. After acquiring the request, the target equipment may return pre-acquired connection information to the initiating equipment, and if the transmission module of the target equipment is not activated, the target equipment activates the transmission module.

In step 101, when the two parties are connected in a BT manner, the initiating equipment indicates the connection manner adopted by the target equipment and corresponding connection information. For example, instructing to connect using the BT manner and acquire the MAC address; and when the two parties are connected in a Wi-Fi manner, the initiating equipment instructs the used connection manner, while instructing the target equipment to provide connection information. Furthermore, it instructs the connection information of a network node A (such as an access point (AP)) currently used by the initiating equipment. The connection information of the network node A contains the identity and IP address of the network node. In this way, after receiving the request, the target equipment looks up based on the connection information of the network node A. If the target equipment has ever connected to the network node A before and was allocated an IP address by the network node A, with the IP address being not changed in ordinary cases, then, the target equipment transmits this allocated IP address to the initiating equipment.

In this embodiment, when the initiating equipment is in contact with the target equipment, the method comprises: judging (determining) whether a transmission module corresponding to the connection manner is activated; and activating the transmission module, if the result of judgment (determination) is that the transmission module is not activated. Such steps may be performed before or after step 101, or may be performed at the same time as step 101 is performed.

In this embodiment, if the result of judgment is that the transmission module is not activated, namely, the initial state of the transmission module is disabled, and when the connection between the initiating equipment and the target equipment is established and data transmission is completed, the method further comprises: disabling the transmission module. In this way, the transmission module restores to the initial disabled state.

In this embodiment, if the result of judgment is that the transmission module is activated, namely, the initial state of the transmission module is enabled, and when the connection between the initiating equipment and the target equipment is established and data transmission is completed, the initial active state may be kept, or the transmission module may be disabled, as actually required.

In this embodiment, before step 101, if the initiating equipment judges that its transmission module is not activated, it activates its transmission module. In such a case, in order to improve user experiences, after the initiating equipment activates its transmission module, it further comprises: prompting a user to acquire the connection information of the target equipment, that is, the initiating equipment displays prompt information for prompting to acquire the connection information of the transmission module of the target equipment, i.e. prompting that the user of the initiating equipment will perform near-field contact with the target equipment of the wireless communication link. Since the wireless connection method in the embodiments of the present invention is based on the NFC technology which is a near-field wireless communication technology, the data transmission range of the NFC technology is within 10 cm (the actually effective range is 1-2 cm), so as to avoid accidents or activation of links without authorization. Hence, when the connection establishing method of the embodiments of the present invention is adopted, the initiating equipment and the target equipment are required to be very close to each other. Therefore, after the initiating equipment activates its transmission module, the initiating equipment may display prompt information, so as to avoid a connection failure caused by connecting the target equipment within the allowable range of the transmission module by using the connection method of the transmission module, after the initiating equipment enables the transmission module.

In step 102, the initiating equipment receives the connection information of the target equipment returned by the target equipment. In this way, the initiating equipment needs not to wait for a certain period of time. In the prior art, if the target equipment does not activate its transmission module, after the target equipment receives the request transmitted by the initiating equipment, it needs to activate its transmission module and returns information indicating that the initiating equipment needs to wait for a certain period of time. The target equipment activates its transmission module within this period of time, and then acquires its connection information; at the initiating party, after receiving the information of the target equipment, the initiating equipment waits for a certain period of time according to the information, and then resends a request for acquiring the connection information. At this moment, if the transmission module of the target equipment is activated and its connection information is acquired, the target equipment returns the information to the initiating equipment. Thus, in the prior art, the initiating equipment needs to wait for a certain period of time to acquire the connection information.

In this embodiment, after the connection between the two parties is established in step 103, the initiating equipment may transmit data to the target equipment.

It can be seen from the above embodiment that after the initiating equipment transmits the request message in the NFC manner, it may receive the connection information of the transmission module returned by the target equipment in the NFC manner, and then establish connection with the target equipment based on this connection information, with no need of retransmitting a request after waiting for a certain period of time, and with no need of placing the initiating equipment and the target equipment together, bringing great convenience to users in using the above equipment. Furthermore, the initiating equipment may judge whether its transmission module is activated before or after transmitting the request, or at the same time as transmitting the request, and if the transmission module is not activated, it activates its transmission module, and restores the transmission module into a disabled state when the data transmission is completed.

Fig. 2 is a flowchart of the method for establishing connection in accordance with the 2nd embodiment of the present invention. This embodiment will be explained from the point of view of a receiving side. As shown in Fig. 2, the method comprises:
Step 201: receiving, by a target equipment, a request transmitted by an initiating equipment in an NFC manner, the request being used for instructing to acquire connection information of the target equipment corresponding to a connection manner.
Step 202: transmitting, by the target equipment, the pre-acquired connection information to the initiating equipment in an NFC manner in response to the request.

It can be seen from the above embodiment that no matter whether the transmission module of the target equipment is activated, the target equipment transmits prestored connection information to the initiating equipment. In this way, the initiating equipment directly establishes connection with the target equipment based on the connection information, without needing to wait, and the two parties of the equipment do not need to be in contact for a long time, bringing convenience to the users.

In this embodiment, before step 201, the method further comprises: reading the connection information from a configuration file of the target equipment; and storing the connection information. For example, for a manner of BT, the target equipment stores original equipment information "Bluctooth_bdaddr", i.e. the configuration file, in which a MAC address of the BT is contained. When the target equipment is operated for the first time, it reads the MAC address from the configuration file and stores the MAC address. Thus, when receiving the request from the initiating equipment, it directly returns the stored MAC address to the initiating equipment; and if the BT module is not activated, the target equipment activates the BT module while it returns the MAC address.

In another embodiment, before step 201, the method further comprises: acquiring the connection information from a network node and storing the connection information. For example, for a Wi-Fi manner, since the network node, i.e. a hotspot B (such as an access point AP), is generally fixed, its connection information (identity and IP address) is fixed. When a terminal equipment is connected to the hotspot B via Wi-Fi, after the IP address is acquired, the IP address is valid for a relatively long period of time, that is, the IP address obtained by the same equipment within a certain period of time is unchanged. Thus, the terminal equipment may correspondingly store the hotspot B and the connection information of the terminal equipment. When the target equipment receives the request from the initiating equipment, if the request instructs to use the Wi-Fi manner, and the information of the hotspot (such as the identity of the hotspot, or the IP address of the hotspot may be contained) currently used by the initiating equipment is also transmitted to the target equipment, after receiving the request, the target equipment first looks up whether the connection information of the hotspot and the IP address allocated to the target equipment are stored already; and if already stored, then transmits the IP address of the target equipment to the initiating equipment, such that the initiating equipment establishes connection with the target equipment based on the IP address.

Furthermore, after step 201, the method further comprises: if the transmission module is not activated, activating the transmission module. In this way, connection with the initiating equipment may be established after the transmission module is activated.

In this embodiment, after the connecting between the initiating equipment and the target equipment is established, the method further comprises: receiving the data transmitted by the initiating equipment.

In this embodiment, after receiving the request from the initiating equipment, the target equipment may directly transmit the pre-acquired connection information to the initiating equipment. In such a case, even though the transmission module of the target equipment is not activated, the target equipment does not need to transmit to the initiating equipment information on waiting for a period of time, and the initiating equipment does not need to wait.

The method for establishing connection of an embodiment of the present invention, with the wireless connection manner being BT and the transmission module of the terminal equipment being a BT module, will be explained below with reference to the drawings.

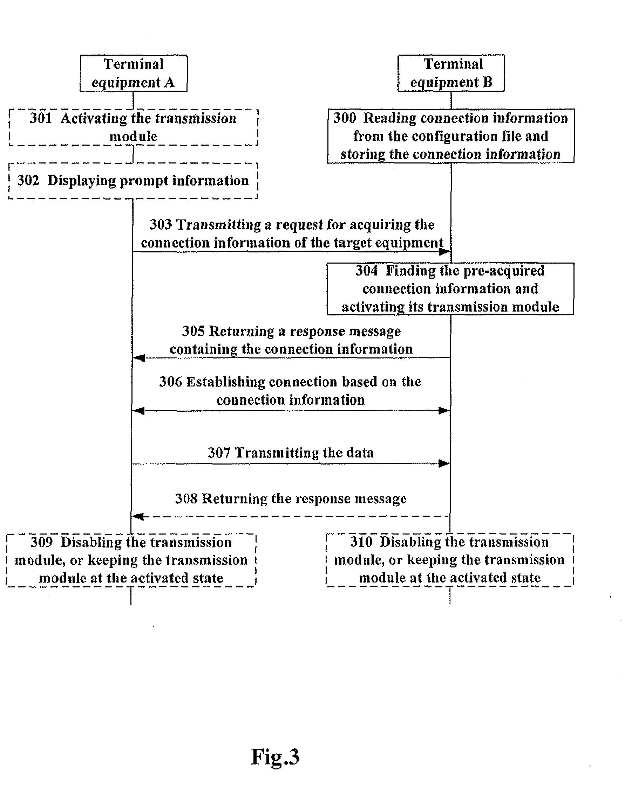

Fig. 3 is a flowchart of the method for establishing connection in accordance with the 3^{rd} embodiment of the present invention. As is shown in Fig. 3, terminal equipment A is an initiating equipment, and terminal equipment B is a target equipment. As shown in Fig. 3, the method comprises:
Step 300: reading connection information by terminal equipment B from its configuration file when it is operated for the first time, and storing the read connection information. In this embodiment, for BT, the connection information is an MAC address.
Step 301: judging by the terminal equipment A whether its transmission module is activated, and activating its transmission module if the result of judgment is that the transmission module is not activated. The transmission module is a BT module; however, this is merely an embodiment of the present invention, and other communication modules may also be used.
Step 302: displaying prompt information by the terminal equipment A so as to prompt the terminal equipment A to acquire the connection information of the terminal equipment B. Since the communication is based on the NFC technology, the terminal equipment A and the terminal equipment B are required to be in contact, e.g., in close proximity, with each other.
Step 303: transmitting in the NFC manner by the terminal equipment A to the terminal equipment B a request for acquiring the connection information of the transmission module of the terminal equipment B. In this embodiment, the connection information may be the MAC address of the BT module.
Step 304: finding the pre-acquired connection information by the terminal equipment B. In this embodiment, the terminal equipment B may read the connection information in advance from the configuration file, and store the read connection information. The terminal equipment B activates its BT module;
Step 305: returning a response message containing the connection information by the terminal equipment B to the terminal equipment A. The terminal equipment B returns the obtained MAC address to the terminal equipment A.
Step 306: establishing connection with the terminal equipment B by the terminal equipment A based on the connection information after receiving the connection information. In this embodiment, the establishment of the connection between the terminal equipment A and the terminal equipment B may be performed in any one of the technologies in the prior art, which shall not be described any further.
Step 307: transmitting the data to be transmitted to the terminal equipment B by the terminal equipment A after the connection is established.
Step 308: returning the response message by the terminal equipment B after receiving the data, this step being optional.
Step 309: when the initial state of the transmission module of the terminal equipment A is that it is not activated, and when the terminal equipment completes the transmission of data, it disables the transmission module, such that the transmission module is restored to the initial disabled state. This step may be omitted when the initial state of the transmission module of the terminal equipment A is that it is activated; thus, the terminal equipment A still keeps the activated state of the transmission module In another case, the transmission module may be disabled if it previously was in the disabled state.
Step 310: similar to step 309, which is also optional.

In the above embodiment, after step 303, when the transmission module of the terminal equipment B is not activated, the terminal equipment B activates its transmission module. This step may be performed sequentially with step 304, or may be performed at the same time as step 304 is performed, as actually required.

In the above embodiment, in a case where the terminal equipment B does not acquire the MAC address of the BT module in advance, the terminal equipment B needs to provide its connection information in a manner of the prior art, namely, first transmitting a response message to the terminal equipment A, instructing the terminal equipment A to wait for a certain period of time, and at the same time, the terminal equipment B activates its transmission module and reads the MAC from the MAC address; then the terminal equipment A retransmits a request to the terminal equipment B after waiting for a period of time. At this moment, if the terminal equipment B is activated and acquires the MAC address, the terminal equipment B transmits the MAC address to the terminal equipment A. In comparison with the prior art, the initiating equipment in this embodiment of the present invention does not need to wait, and both parties of equipment need not be in contact for a long time.

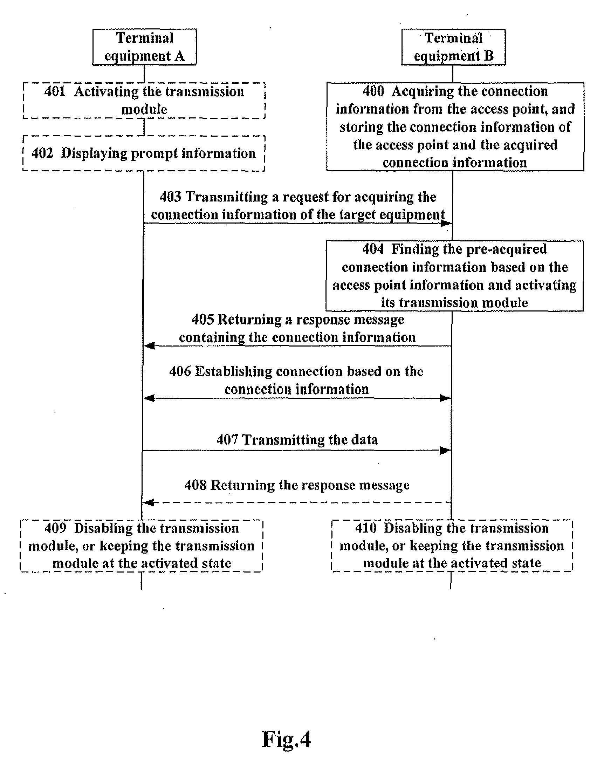

The method for establishing connection of an embodiment of the present invention will be explained below with reference to the drawings and in the Wi-Fi manner. Fig. 4 is a flowchart of the method for establishing connection in accordance with the fourth embodiment of the present invention. In Fig. 4 terminal equipment A is an initiating equipment, and terminal equipment B is a target equipment.

As shown in Fig. 4, the method comprises:
Step 400: connecting, by the terminal equipment B, in the Wi-Fi manner to a hotspot, such as an access point A which allocates an IP address to the terminal equipment B, and storing correspondingly the connection information of the access point and the IP address allocated by the access point A to the terminal equipment B. In this embodiment, the IP address of an access point for an ordinary home network is fixed, and its connection information is also fixed, namely, its identity and IP address are fixed. In addition, after the access point A allocates an IP address to the terminal equipment B of the home network, the IP address will not be changed for a long period of time.
Step 401: judging by the terminal equipment A whether its transmission module is activated, and activating its transmission module if the result of judgment is that the transmission module is not activated. In this embodiment the transmission module is a Wi-Fi module; however, this is merely an embodiment of the present invention, and other communication modules may also be used.
Step 402: displaying prompt information by the terminal equipment A so as to prompt the terminal equipment A to acquire the connection information of the terminal equipment B. Since since the communication is based on the NFC, the terminal equipment A and the terminal equipment B are required to be in contact with each other at a near distance.
Step 403: transmitting by the terminal equipment A to the terminal equipment B a request for acquiring the connection information of the transmission module of the terminal equipment B. In this embodiment, the request instructs to acquire the connection information of the terminal equipment B, the connection information being IP address of the terminal equipment. Furthermore, the request further contains identification information of the hotspot to which the terminal equipment A is currently connected, such as the access point A.
Step 404: finding, by the terminal equipment B according to the identification information of the access point A, whether an IP address allocated by the access point A already exists. If the Wi-Fi module of the terminal equipment B is not activated, activating the Wi-Fi module by the terminal equipment B.
Step 405: if finding the IP address, returning a response message containing the connection information by the terminal equipment B to the terminal equipment A; the terminal equipment B returns the obtained IP address to the terminal equipment A.
Step 406: establishing connection with the terminal equipment B by the terminal equipment A based on the connection information after receiving the connection information. In this embodiment, the establishment of the connection between the terminal equipment A and the terminal equipment B may be performed in any one of the technologies in the prior art, which shall not be described any further.
Step 407: transmitting the data to be transmitted to the terminal equipment B by the terminal equipment A after the connection is established.
Step 408: returning the response message by the terminal equipment B after receiving the data, this step being optional.

Furthermore, steps 409 and 410 may also be included, which are similar to steps 309 and 310 in Fig. 3, and shall not be described any further.

In the above embodiment, in a case where the terminal equipment B does not acquire the IP address allocated by the access point A in advance, the terminal equipment B needs to provide its connection information in a manner of the prior art, namely, first transmitting a response message to the terminal equipment A, instructing the terminal equipment A to wait for a certain period of time; and at the same time, the terminal equipment B activates its Wi-Fi module and connects to the access point A and acquires IP address from the access point A; and the terminal equipment A retransmits a request to the terminal equipment B after waiting for a certain period of time. At this moment, if the Wi-Fi module of the terminal equipment B is activated and the IP address is acquired, the terminal equipment B transmits the IP address to the terminal equipment A. In comparison with the prior art, the initiating equipment in this embodiment of the present invention needs not to wait, and both parties of equipment need not to be in contact for a long time.

In this embodiment, the target equipment may acquire its connection information in advance, and directly transmits the connection information to the initiating equipment after receiving the request from the initiating equipment. In such a case, even though the transmission module of the target equipment is not activated, the target equipment needs not to transmit information on waiting for a certain period of time to the initiating equipment, the initiating equipment needs not to wait, and both parties of equipment are not required to be in contact closely, bringing great convenience to users in using the above equipment.

The above flowcharts are illustrative and exemplary only, the method according to the embodiments of the present invention does not necessarily comprise all the steps above, and some of the steps may be omitted, combined or performed in a reverse order. The method of the embodiments of the present invention is not limited to being carried out in the described orders, and may be carried out in other orders, parallelly, or separately. Such variants shall be covered by the scope of the present invention without departing from the spirits and scope of the present invention.

For example, as shown in Fig. 3, in steps 304 and 404, in the case where the transmission module of the terminal equipment B is not activated, the transmission module may be activated at the same time. In addition, the step of activating the transmission module may also be performed before steps 304 and 404.

Another example, step 301 may be performed at the same time as step 303, or after step 303. In such a case, step 302 may be excluded. Likewise, step 404 may be performed at the same time as step 403, or after step 403. In such a case, step 402 may be excluded.

Another example is in the case where the result of judgment in step 301/401 is that the transmission module is not activated, that is, the initial state of the transmission module of the initiating equipment A is disabled. In step 307/407, after the connection between the terminal equipment A and the terminal equipment B is established, in completing the data transmission, steps 309 and 310 is completed. Then steps 409 and 410 may be further included, as follows: disabling the transmission module, namely, restoring the transmission module into its initial state.

Another case is where the result of judgment in step 301/401 is that the transmission module is activated, that is, the initial state of the transmission module of the initiating equipment A is enabled. In step 307/407, after the connection between the terminal equipment A and the terminal equipment B is established and the data transmission, steps 309 and 310 and steps 409 and 410 may be further included, that is, keeping the initial state of the transmission module. However, in order to save electric power, the transmission module may be disabled. Hence, steps 309 and 310 and steps 409 and 410 may be optional.

In the above embodiments, both the terminal equipment A and the terminal equipment B may be such terminal equipment of battery-powered portable electronic apparatuses as mobile phones, and computers, etc., with NFC and transmission module being configured at the same time.

The embodiments of the present invention further provide a connection establishing module and a terminal equipment, as stated below. Since the principles of solving problems of the connection establishing module and terminal equipment are similar to those of the method for establishing connection of the above embodiments, the implementation of the method may be referred to in the implementation of the connection establishing module and a terminal equipment, and the similar parts are omitted.

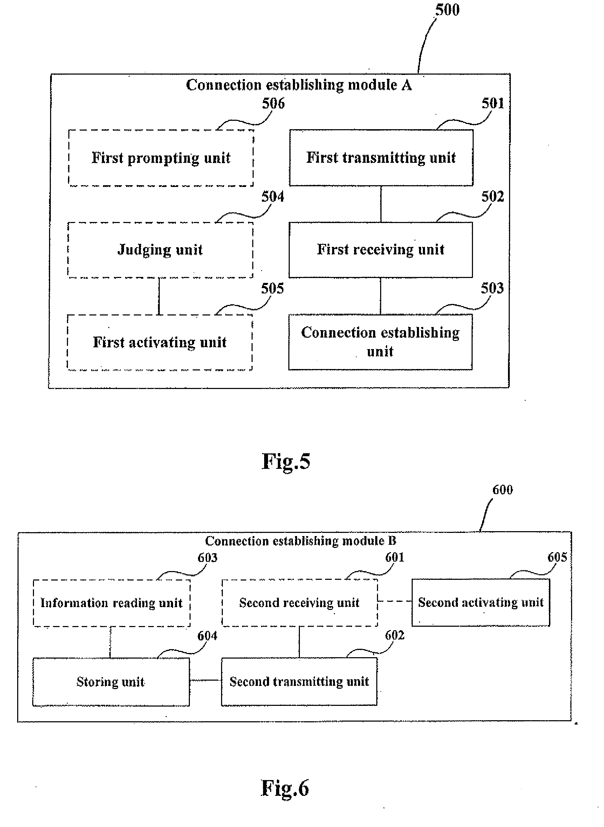

Fig. 5 is a schematic diagram showing the structure of the connection establishing module A (also designed by reference number 500) in accordance with the fifth embodiment of the present invention. The connection establishing module is applicable to a terminal equipment equipped with an NFC module and a transmission module, and when the terminal equipment acts as an initiating party, the connection establishing module may be preferred to as a connection establishing module A. As shown in Fig. 5, the connection establishing module A comprises: a first transmitting unit 501, a first receiving unit 502, and a connection establishing unit 503.

The first transmitting unit 501 is used for transmitting to a target equipment in an NFC manner, a request for acquiring connection information of the target equipment corresponding to a connection manner. The first receiving unit 502 is used for receiving a response message containing the connection information returned by the target equipment in an NFC manner in response to the request; wherein the connection information is pre-acquired and stored by the target equipment. The connection establishing unit 503 is used for establishing connection with the target equipment based on the connection information.

In this embodiment, the connection information is the address of the transmission module, and the transmission module may be such near-field wireless communication modules as a BT module, a Wi-Fi module, etc. The connection information is acquired by the target equipment from its configuration file, or acquired from a hotspot, i.e. an access point. The method for acquiring the connection information is similar to that described in embodiments 1-4, which shall not be described any further.

In this embodiment, the request transmitted by the first transmitting unit 501 is used for indicating the connection manner adopted, and for indicating the connection information of the target equipment. Furthermore, it may also indicate the information of the network node currently connected.

In this embodiment, the connection establishing module A 500 further comprises a judging unit 504 and a first activating unit 505. The judging unit 504 is used for judging whether a transmission module corresponding to the connection manner is activated; and the first activating unit 505 is used for activating the transmission module, if the result of judgment of the judging unit 504 is that the transmission module is not activated.

In this embodiment, the connection establishing module A 500 further comprises a disabling unit (not shown), for disabling the transmission module when the connection between the initiating equipment and the target equipment is established and data transmission is completed, this disabling unit being optional.

In the above embodiment, the judging unit 504 and first activating unit 505 may perform when the terminal equipment A and the terminal equipment B are in contact, or may perform at the same time when the first transmitting unit 501 performs, or may perform after the first transmitting unit 501 performs.

In this embodiment, as shown in Fig. 5, when the first activating unit 505 performs before the first transmitting unit 501, a first prompting unit 506 may be further included, so that prompt information may be displayed to prompt to acquire the connection information of the target equipment, the first prompting unit 506 is optional. In this way, the first transmitting unit 501 of the terminal equipment A may transmit a request to terminal equipment B according to the instruction of a user.

Furthermore, the connection establishing module A 500 may further comprise a data transmitting unit (not shown) for transmitting data to the target equipment after the connection with the target equipment is established.

Fig. 6 is a schematic diagram showing the structure of the connection establishing module 600 in accordance with the sixth embodiment of the present invention. The connection establishing module is applicable to a terminal equipment equipped with an NFC module and a transmission module, and when the terminal equipment is used as a target party, the connection establishing module may be referred to as a connection establishing module B. As shown in Fig. 6, the connection establishing module B 500 comprises: a second receiving unit 601 and a second transmitting unit 602. The modifier "second" is used to facilitate distinguishing components described with respect to Fig. 5 using the modifier "first".

The second receiving unit 601 is used for receiving a request transmitted by an initiating equipment in an NFC manner, the request being used for instructing to acquire connection information of the target equipment to which the connection establishing module belongs. The second transmitting unit 602 is used for transmitting the pre-acquired connection information in an NFC manner to the initiating equipment in response to the request.

As shown in Fig. 6, the connection establishing module B (also designated by the reference numeral 600) further comprises: an information reading unit 603 and a storing unit 604. The information reading unit 603 is used for reading the connection information from the configuration file of the target equipment to which the connection establishing module belongs, The storing unit 604 is used for storing the connection information. For example, when the BT manner is adopted (used), the information reading unit 603 may read the MAC address from its configuration file when the target equipment to which the connection establishing module B belongs starts to operate.

Furthermore, in another embodiment, the connection establishing module B 600 further comprises: an information acquiring unit and a second storing unit (not shown). The information acquiring unit is being used for acquiring the connection information from a network node, and acquiring connection information of the network node. The second storing unit is used for storing the connection information. For example, when a Wi-Fi manner is adopted (used), a hotspot may be connected, an IP address may be allocated by the hotspot, and the target equipment to which the connection establishing module belongs stores the connection information of the hotspot and the IP address allocated by the hotspot.

As shown in Fig. 6, the connection establishing module B 600 further comprises a second activating unit 605 for activating the transmission module of the target equipment when the transmission module of the target equipment to which the connection establishing module belongs is not activated. The second activating unit 605 may perform the activation after the second receiving unit 601 receives the request, or before the second receiving unit 601 receives the request. The dotted line shows the state of activating the transmission module of the target equipment to which the connection establishing module B belongs after the request is received. Moreover, the dotted line may be absent.

Furthermore, the connection establishing module B 600 may further comprise a data receiving unit and a message transmitting unit (not shown) , the data receiving unit being used for receiving the data transmitted by the initiating equipment after the connection with the initiating equipment is established, and the message transmitting unit (which is optional) being used for returning a response message after receiving the data transmitted by the initiating equipment.

In this embodiment, the connection establishing module B 600 may further comprise a disabling unit (not shown) for disabling the transmission module when the target equipment completes the data transmission, and this disabling unit is optional.

A process of establishing connection of the embodiments of the present invention will be described below with reference to Figs. 5 and 6. In this exemplary description the BT manner is used, the terminal equipment A is the initiating equipment equipped with the connection establishing module A, and the terminal equipment B is the target equipment equipped with the connection establishing module B.

First, the information reading unit 603 of the connection establishing module B 600 reads the connection information from the configuration file, and stores the read connection information in the storing unit 604.

When the connection between the terminal equipment A and the terminal equipment B 500 is established, the judging unit 504 of the connection establishing module A judges whether the transmission module of the terminal equipment A is activated. If the result of judgment is that the transmission module is not activated, the first activating unit 505 activates the transmission module; the first prompting unit 506 (which is optional) displays prompt information, so as to prompt the terminal equipment A to acquire the connection information of the terminal equipment B; and the first transmitting unit 501 of the connection establishing module A transmits a request for acquiring the connection information of the terminal equipment B to the terminal equipment B.

The second receiving unit 601 of the connection establishing module B 600 receives the request; and the second transmitting unit 602 returns a response message containing the connection information to the terminal equipment A.

The first receiving unit 502 of the connection establishing module A 500 of the terminal equipment A receives the connection information, and then the connection establishing unit 503 may establish connection with the terminal equipment B based on the connection information. After the connection is established, the data transmitting unit of the connection establishing module A 500 may transmit to the terminal equipment B the data to be transmitted. The data receiving unit of the terminal equipment B may receive the data transmitted by the connection establishing module A 500, and finally may return the response message informing the terminal equipment A. Furthermore, the disabling units of the connection establishing modules A and B 500, 600 for establishing connection may disable the activated transmission modules, such that the transmission modules restore to the initial states to save electric power.

The above explanation is given taking the BT manner as an example. For the Wi-Fi manner, it is similar to the above embodiment, with the differences being that the manner for acquiring the connection information at the connection establishing module B is different, and when the connection establishing module A transmits the request, information on the current hotspot is further included, as stated in embodiments 1-6, which shall not be described any further.

In the above embodiment, the structure of the connection establishing module is described with respect to the initiating side and the target side. Furthermore, the connection establishing module may have the functions of the initiating side and the target side at the same time. Here, the connection establishing module having the functions of the initiating side and the target side at the same time is referred to as a connection establishing module C, with the structure being the combination of Figs. 5 and 6. When the terminal equipment to which the connection establishing module C belongs is acted as the initiating side, it performs the function as shown in Fig. 5, and when the terminal equipment to which the connection establishing module C belongs is acted as the target side, it performs the function as shown in Fig. 6.

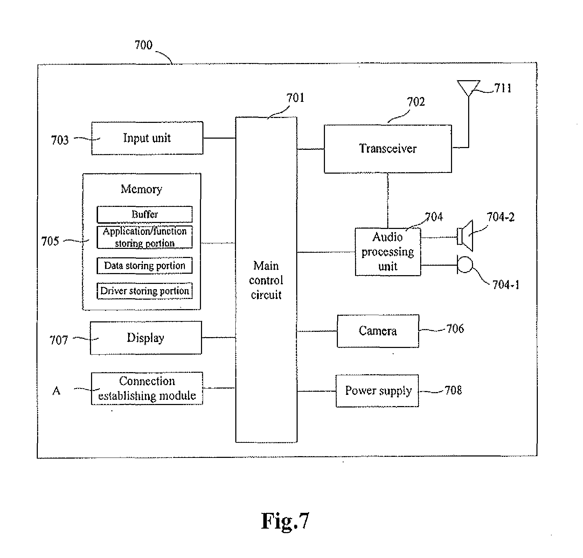

Fig. 7 is a schematic diagram showing the structure of the terminal equipment equipped with a connection establishing module in accordance with the seventh embodiment of the present invention. In this embodiment the terminal equipment is acted as the initiating equipment, which comprises the connection establishing module A of embodiment 5. The structure of the connection establishing module A is as shown in Fig. 5, and the terminal equipment may be a portable equipment, such as a mobile phone, etc.

For example, the terminal equipment is a mobile phone 700, and this figure is exemplary only; the mobile phone 700 may further have other types of circuit components for supplementing or replacing the operating circuit, so as to achieve communication function or other functions. It is obvious that the mobile phone 700 does not necessarily comprise all the components shown in Fig. 7. For example, a camera 706 may be excluded.

In particular, the mobile phone 700 comprises a main control circuit 701, a transceiver 702, an input unit 703, an audio processing unit 704, a memory 705, a camera 706, a display 707, a power supply 708, and a connection establishing module A. The main control circuit 701 is sometimes referred to as a controller or an operating control, which may comprise a microprocessor or other processor devices and/or logic devices, and the main control circuit 701 receives input and controls the operation of every components of the mobile phone 700.

As usual, the input unit 703 provides multiple user input operation. For example, the input unit 703 usually comprises alphanumeric keys for inputting alphanumeric information, such as phone numbers, a list of phone numbers, a contact person information, and a remark, etc. Furthermore, the input unit 703 may comprise specific functional keys, such as a "call send" key for making a call or answering a call, a "call end" key for ending or "hanging up" a call, and a channel recommendation key, etc. Additionally or alternatively, the input unit 703 may be a touch screen. A key or a function similar to a key may be implemented in a touch screen related to the display 707.

As usual, the camera 706 is used for taking image data. The image data taken by the camera 706 are provided to the main control circuit 701, for use in a conventional manner, such as storage, and transmission, etc.

The display 707 may be, for example, an LCD display; however, it is not limited thereto. As usual, the display 707 displays such information to a user as the operational state, time, phone number, contact person information, and various navigation menus, etc., so that the use can use various functions of the mobile phone 700. The display 707 may further be used for visually displaying the contents received by the mobile phone 700 and/or the contents read from the memory 705 of the mobile phone 700. In this embodiment, the display 707 may also display prompt information for acquiring the connection information of the target equipment.

The mobile phone 700 comprises an antenna 711 coupled to the transceiver 702. The transceiver 702 comprises a RF transmitter and a RF receiver for transmitting and receiving signals via the antenna 711. The transceiver 702 may be configured as working in such mobile communication systems as CDMA, and WCDMA, etc., and receiving video and audio contents. For example, the receiver may be an IP data broadcasting compatible receiver, which is compatible with a hybrid network structure providing mobile communication and being based on DVB-H or similar services.

Furthermore, the transceiver 702 is coupled to a loudspeaker 704-2 and a microphone 704-1 via the audio processing unit 704, for providing audio output via the loudspeaker 704-2 and receiving the audio input from the microphone 704-1. The audio processing unit 704 may comprise any appropriate buffers, decoders, and amplifiers, etc. The audio processing unit 704 is further coupled to the main control circuit 701, thereby enabling to record in the mobile phone 700 via the microphone 704-1 and playing the audio signals stored in the memory 705 via the loudspeaker 704-2.

The memory 705 may be, for example, one or more of a cache, a flash memory, a mobile medium, a volatile memory, a nonvolatile memory, or other appropriate devices. The memory 705 comprises, for example, a buffer for buffering data; an application/function storing portion for storing application programs and functional programs, or storing the operational flows to be executed by the main control circuit 701; a data storing portion for storing the type of the mobile phone, which is a mobile device code here, and furthermore, for storing the current power level, the numerical value of the real-time power consumption of the mobile phone 700, and contact person, digital data, picture, voice and/or other data used by the mobile phone 700; and a driver storing portion for storing the drivers of every components of the mobile phone 700, such as a driver of the connection establishing module A.

The power supply 708 is used for supplying power to the mobile phone 700.

Every components of the mobile phone 700 may be realized by specific hardware, firmware, software, or a combination thereof, without departing from the scope of the present invention.

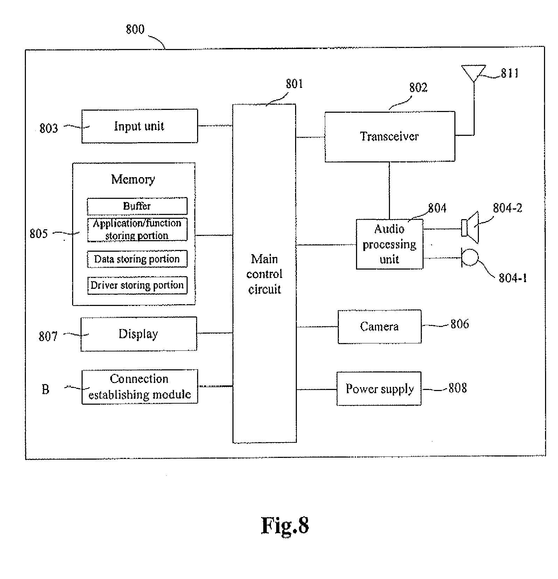

Fig. 8 is a schematic diagram showing the structure of the terminal equipment 800 provided with a connection establishing module in accordance with the 8th embodiment of the present invention. The terminal equipment 800 is used as a target equipment equipped with the connection establishing module B 600 of embodiment 6, the structure of the connection establishing module B being as shown in Fig. 6. The memory 805 may also store the acquired connection information. As is evident from the drawings of Figs. 7 and 8, components designated by reference numerals in the "800" series and described herein are similar to those described above and designated by the corresponding "700" series reference numerals. The functions of every components of the target equipment and the function of an connection establishing module B are as stated in the above embodiments, which shall not be described any further.

Furthermore, another embodiment of the present invention provides a terminal equipment equipped with a connection establishing module C. In various cases, the terminal equipment may respectively correspond to an initiating equipment and a target equipment, which shall not be described any further.

It can be seen from the above embodiment that when data are transmitted between both parties of communication equipment, after transmitting the request message, the initiating equipment may receive the connection information returned by the target equipment, and establish the connection with the target equipment based on the connection information, with no need of retransmitting a request after waiting for a certain period of time, and with no need of keeping the initiating equipment and the target equipment together, bringing great convenience to users in using the above equipment.

The initiating equipment may further judge whether its transmission module is activated before, after or at the same time as transmitting the request message, and activate the transmission module in the case where the transmission module is not activated. After the data transmission is completed, the initial state of the transmission module may be restored.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

The above apparatus and method of the present invention may be implemented by hardware, or may be implemented by hardware in combination with software. The present invention relates to such a computer-readable program that when it is executed by a logic component, it enables the logic component to implement the above apparatus or its compositions, or enables the logic component to implement all the method or steps described above. The present further relates to a storage medium in which the above program is stored, such as a hard disk, a floppy disk, a compacted disk, a DVD, or a flash memory, etc.

The many features and advantages of the embodiments are apparent from the detailed specification and, thus, it is intended by the appended claims to cover all such features and advantages of the embodiments that fall within the true spirit and scope thereof. Further, since numerous modifications and changes will readily occur to those skilled in the art, it is not desired to limit the inventive embodiments to the exact construction and operation illustrated and described, and accordingly all suitable modifications and equivalents may be retorted to, falling within the scope thereof.

## Claims

1. A method for establishing connection, comprising:
transmitting (101), by an initiating equipment to a target equipment in an NFC manner, a request for acquiring connection information of the target equipment corresponding to a connection manner;
receiving (102) a response message containing the connection information returned by the target equipment in an NFC manner in response to the request; wherein the connection information is pre-acquired and stored by the target equipment; and
establishing (103) connection with the target equipment based on the connection information.

2. The method according to claim 1, wherein the connection information, comprises address information of the target equipment.

3. The method according to claim 1 or 2, wherein the request is further used for indicating connection information of a network node currently used by the target equipment.

4. The method according to any one of claims 1-3, wherein the connection information is acquired by the target equipment from a configuration file based on the connection manner, or acquired from the network node based on the connection manner.

5. The method according to any one of claims 1-4, wherein the method further comprises:
judging whether a transmission module corresponding to the connection manner is activated; and
activating the transmission module, if the result of judgment is that the transmission module is not activated, and
wherein the method further comprises: disabling the transmission module when the connection between the initiating equipment and the target equipment is established and data transmission is completed.

6. A method for establishing connection, comprising:
receiving (201), by a target equipment, a request transmitted by an initiating equipment in an NFC manner, the request being used for instructing to acquire connection information of the target equipment corresponding to a connection manner; and
transmitting (202) the pre-acquired connection information in an NFC manner to the initiating equipment in response to the request.

7. The method according to claim 6, wherein the connection information comprises address information of the target equipment.

8. The method according to claim 6 or 7, wherein before receiving the request transmitted by the initiating equipment, the method further comprises:
reading (300) the connection information from the configuration file of the target equipment, or reading the connection information from a network node;
storing (300) the connection information; and
wherein the method further comprises: if a transmission module of the target equipment corresponding to the connection manner is not activated, activating the transmission module.

9. A connection establishing module (500), comprising:
a first transmitting unit (501) for transmitting to a target equipment in an NFC manner, a request for acquiring connection information of the target equipment corresponding to a connection manner;
a first receiving unit (502) for receiving a response message containing the connection information returned by the target equipment in an NFC manner in response to the request; wherein the connection information is pre-acquired and stored by the target equipment; and
a connection establishing unit (503) for establishing connection with the target equipment based on the connection information.

10. The connection establishing module (500) according to claim 9, wherein the connection information is address information of the target equipment; and
wherein the connection information is acquired by the target equipment from its configuration file, or acquired from a network node based on the connection manner.

11. The connection establishing module (500) according to claim 9 or 10, wherein the connection establishing module (500) further comprises:
a judging unit (504) for judging whether a transmission module corresponding to the connection manner is activated;
a first activating unit (505) for activating the transmission module, if the result of judgment of the judging unit is that the transmission module is not activated; and
wherein the connection establishing module (500) further comprises:
a disabling unit for disabling the transmission module when the connection between the initiating equipment and the target equipment is established and data transmission is completed.

12. A connection establishing module (600), comprising:
a second receiving unit (601) for receiving a request transmitted by an initiating equipment in an NFC manner, the request being used for instructing to acquire connection information corresponding to a connection manner, of the target equipment to which the connection establishing module belongs; and
a second transmitting unit (602) for transmitting the pre-acquired connection information in an NFC manner to the initiating equipment in response to the request.

13. The connection establishing module (600) according to claim 12, wherein the connection information is an address to which the transmission module corresponds.

14. The connection establishing module (600) according to claim 12 or 13, wherein the connection establishing module (600) further comprises:
an information reading unit (603) for reading the connection information from the configuration file of the target equipment;
a first storing unit (604) for storing the connection information; and
wherein the connection establishing module (600) further comprises:
an information acquiring unit (603) for acquiring the connection information from a network node, and acquiring connection information of the network node; and
a second storing unit (604) for storing the connection information.

15. The connection establishing module (600) according to any one of claims 12-14, wherein the connection establishing module (600) further comprises:
a second activating unit (605) for activating the transmission module in case that a transmission module of the target equipment corresponding to the connection manner is not activated.
